# FASCICULE DE BREVET EUROPEEN

(11) **EP 0 964 593 B1**
(45) Date de publication et mention de la délivrance du brevet: **22.06.2016**
(21) Numéro de dépôt: 99400942.1
(22) Date de dépôt: 19.04.1999
(51) Int. Cl.: H04M 1/72

(54) **Procédé d'affichage de séquences d'images par un équipement mobile de radiocommunication coopérant avec un module d'identification d'abonné**
Verfahren zür Anzeige einer Bildsequenz für Mobil-Funkgerät in Zusammenarbeit mit einem Teilnehmer-Identifikationsmodul
Method for displaying a sequence of images on a mobile radiocommunication equipment in cooperation with a subscriber identification module

(30) Priorité: 07.05.1998 FR 9805835
(43) Date de publication de la demande: 15.12.1999
(73) Titulaire: DRNC HOLDINGS, INC., Wilmington, Delaware 19809 (US)
(72) Inventeur: Hubbe, Pascal, 75014 Paris (FR); Lelong-Gilbert, Anne-Gaelle, 78220 Viroflay (FR)
(74) Mandataire: Awapatent AB

(56) Documents cités:
- EP-A- 0 831 629
- "GSM TECHNICAL SPECIFICATION GSM 11.14 VERSION 5.7.0" avril 1998 (1998-04) , EUROPEAN TELECOMMUNICATIONS STANDARDS INSTITUTE (ETSI) , SOPHIA ANTIPOLIS (FR) XP002089350 * page 15, alinéa 6 - page 17, alinéa 6.4.2 * * page 26, alinéa 6.6.1 * * page 33, alinéa 6.9 * * page 63 *

## Description

La présente invention concerne un système de radiocommunication, notamment de type GSM (*Global System for Mobile communications* en anglais), DCS (pour *Digital Cellular System,* toujours en anglais) ou PCS (*Personnal Communication System*).

Plus particulièrement, l'invention est relative à un procédé permettant d'afficher une animation graphique sur un écran d'un équipement mobile de radiocommunication, à la demande d'un module d'identification d'abonnée connecté à cet équipement.

Les recommandations GSM de l'ETSI (*European Telecommunication Standard Institute*) préconisent l'utilisation d'un module d'identification d'abonné ou SIM (pour *Subscriber Identity Module*) pour y stocker d'une part les données propres à l'utilisateur et d'autre part les données relatives aux services supplémentaires qui sont apportées au terminal de radiocommunication.

La recommandation GSM 11.11 de l'ETSI, intitulée *Digital cellular telecommunications system (phase 2+); Specification of the Subscriber Identity Module - Mobile Equipment (SIM-ME) interface,* définit l'interface entre le module d'identification d'abonné (SIM) et l'équipement mobile de radiocommunication (ME pour *Mobile Equipment,* en anglais).

La recommandation GSM 11.14 de l'ETSI, intitulée *Digital cellular telecommunications system (Phase 2+); Specification of the SIM Application Toolkit for fhe Subscriber Identity Module - Mobile Equipment (SIM-ME) interface,* définit la façon dont les applications (ou services) stockées sur le module d'identification d'abonné (SIM) doivent communiquer avec l'équipement mobile de radiocommunication (ME).

En particulier, cette recommandation décrit un ensemble de fonctions appelées fonctions dynamiques (ou *proactives,* en anglais) que le module d'identification d'abonné peut adresser à l'équipement mobile.

Les services supplémentaires qui sont stockés sur le module d'identification d'abonné peuvent être de différentes natures et de différents niveaux. À titre d'exemples, on peut citer :
- un service de stockage de données de type répertoire téléphonique,
- un service d'émission et de réception de messages alphanumériques courts (SMS dans la terminologie propre au GSM, pour *Short Message Service*),
- un service d'affichage de données alphanumériques sur l'écran de l'équipement mobile de radiocommunication.

L'intérêt de cette façon de faire est de rendre indépendants les services et le type d'équipement. Il est alors possible d'exploiter les services offert par un module d'identification d'abonné à partir de n'importe quel équipement de radiocommunication, c'est-à-dire indépendamment de son constructeur.

Toutefois, il s'avère que l'état de la technique ne permet pas d'afficher sur l'écran du terminal une séquence animée d'images, à partir du module d'identification d'abonné.

Dans le cadre des recommandations GSM 11.11 et GSM 11.14, la seule possibilité que possède le module d'identification d'abonné pour afficher des informations sur l'écran du terminal est de présenter une commande intitulée DISPLAY TEXT.

Un autre exemple se trouve dans le document EP0831629.

La présente invention pallie donc une insuffisance de l'état de la technique en permettant au module d'identification d'abonné d'afficher une séquence d'images sur un écran du terminal de radiocommunication.

Pour cela, l'invention a pour objet un procédé d'affichage d'une séquence d'images sur un moyen de visualisation associé à un équipement mobile de radiocommunication coopérant avec un module d'identification d'abonné, comportant les étapes ordonnées suivantes :
- émission par ledit module d'identification d'abonné d'une commande d'affichage de séquence d'images, à destination dudit équipement mobile,
- exécution par ledit équipement mobile de ladite commande sur ledit moyen de visualisation, caractérisé en ce que ladite séquence d'images est stockée dans un fichier dudit mobile d'identification d'abonné.

Afin de mettre en oeuvre ce procédé, l'invention a aussi pour objet un système de radiocommunication comportant un module d'identification d'abonné coopérant avec un équipement mobile possédant un moyen de visualisation, ledit module d'identification d'abonné possédant un moyen d'émission d'une commande d'affichage de séquences d'images à destination dudit équipement mobile et ledit équipement mobile possédant un moyen d'exécution de ladite commande sur ledit moyen de visualisation, caractérisé en ce que ladite séquence d'images est stockée dans un fichier dudit module d'identification d'abonné.

D'autres caractéristiques et avantages de l'invention apparaîtront à la lecture de la description suivante d'un mode de réalisation préférentiel de l'invention, donné à titre de simple exemple indicatif et non limitatif, et des figures annexées.

La figure 1 illustre un système de radiocommunication conforme à un mode de réalisation particulier de l'invention, comportant un module d'identification d'abonné et un équipement mobile.

La figure 2 illustre le stockage de la séquence d'images dans un fichier du module d'identification d'abonné.

Cette description sera faite dans la cadre des recommandations GSM 11.11 et GSM 11.14 de l'ETSI. Toutefois, il est naturellement à la portée de l'homme du métier d'étendre cet exemple de mise en oeuvre à d'autres systèmes de radiocommunication.

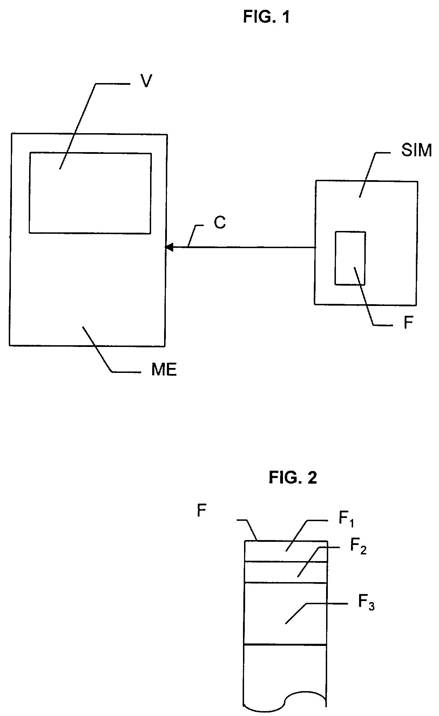

Selon la recommandation GSM 11.11 et conformément à la figure 1, un terminal de radiocommunication est composé d'un module d'identification d'abonné SIM et d'un équipement mobile ME.

Le protocole de communication et l'interface entre ces deux éléments sont décrits par les recommandations GSM 11.11 pour les aspects généraux et GSM 11.14 pour les différentes fonctions que le module d'identification d'abonné SIM peut adresser à l'équipement mobile ME.

Selon ces recommandations, ce protocole est de type maître/esclave, l'équipement mobile ME jouant toujours le rôle du maître. Cela signifie notamment que le module d'identification d'abonné SIM ne peut transmettre une commande à l'équipement mobile ME que sur requête de celui-ci.

Le mécanisme d'émission d'une commande par le module d'identification d'abonné à l'adresse de l'équipement module est plus précisément décrit dans le paragraphe 6.1 de la recommandation GSM 11.14 : lorsque l'équipement mobile ME envoie une commande vers le module d'identification d'abonné SIM, celui-ci renvoie un message de résultat qui comporte un champ de statuts.

Une certaine valeur de ce champ de statuts signifie à l'équipement que le module d'identification d'abonné SIM désire émettre une commande dynamique. À ce moment-là, l'équipement mobile ME émet une commande particulière intitulée FETCH qui récupère cette commande dynamique.

Selon une mise en oeuvre de l'invention, une nouvelle commande est ajoutée à l'ensemble des commandes dites dynamiques déjà existantes. Cette commande indique à l'équipement mobile ME qu'une séquence d'images doit être affichée sur un moyen de visualisation V qui lui est associé.

Selon une autre mise en oeuvre de l'invention, une commande existante est modifiée pour permettre d'indiquer à l'équipement mobile ME qu'une séquence d'images doit être affichée sur un moyen de visualisation V qui lui est associé.

La séquence d'images proprement dite est stockée dans un fichier F à l'intérieur du module d'identification d'abonné SIM.

Le module d'identification d'abonné SIM envoie dans un premier temps, une commande C à destination de l'équipement mobile ME lui indiquant d'afficher une séquence d'images sur le moyen de visualisation V. Dans un second temps, l'équipement mobile ME lit dans le fichier F toute ou partie de la séquence d'images puis l'affiche sur ce moyen de visualisation V.

La structure du système de fichiers dans un module d'identification d'abonné ainsi que la façon d'y accéder est décrit dans la recommandation GSM 11.11 de l'ETSI.

Selon une mise en oeuvre de l'invention et ainsi qu'illustré par la figure 2, les différentes images de l'animation sont stockées dans un fichier F de façon séquentielle. Chaque image est mémorisée dans 3 champs du fichier F:
- un premier champ F₁ contient la largeur de l'image en nombre de pixels,
- un deuxième champ F₂ contient la hauteur de l'image en nombre de pixels,
- et un troisième champ F₃ contient les valeurs des pixels de l'image, stockées de façon séquentielle.

Il est à noter que, conformément à la recommandation GSM 11.14, la commande C peut comporter un ensemble de paramètres, qui pris ensemble, ne doivent pas excéder 256 octets.

À titre d'exemple, cette commande C peut posséder un paramètre indiquant le nombre d'images dans la séquence.

Elle peut aussi, de façon optionnelle, posséder un paramètre indiquant le temps d'affichage de chacune des images de la séquence. Un tel paramètre permet, par exemple, d'indiquer un temps d'arrêt sur une ou plusieurs images de la séquence, plutôt que d'avoir une séquence animée se déroulant à vitesse uniforme.

Un autre paramètre optionnel peut être le sens d'affichage de la séquence. Les images de la séquence peuvent être numérotées de 1 à N. Ce paramètre détermine si elles doivent être affichées dans le sens croissant (image 1, image 2, image 3... image N, image 1, image 2...) ou dans le sens décroissant (image N, image N-1,... image 1, image N, image N-1...). Ce paramètre peut donc être de type booléen.

Encore un autre paramètre peut être la durée de la séquence, par exemple en nombre de secondes.

## Revendications

1. Procédé d'affichage d'une séquence d'images sur un moyen de visualisation (V) associé à un équipement mobile (ME) de radiocommunication coopérant avec un module d'identification d'abonné (SIM), comportant les étapes ordonnées suivantes :
• émission par ledit module d'identification d'abonné (SIM) d'une commande (C) d'affichage de séquence d'images, à destination dudit équipement mobile (ME),
• exécution par ledit équipement mobile (ME) de ladite commande (C) sur ledit moyen de visualisation (V), **caractérisé en ce que** ladite séquences d'images est stockée dans un fichier (F) dudit module d'identification d'abonné (SIM).

2. Procédé selon la revendication précédente, **caractérisé en ce que** ladite commande (C) comporte au moins un paramètre parmi l'ensemble suivant :
• nombre d'images dans ladite séquence d'images,
• temps d'affichage de chacune des images de ladite séquence d'images,
• sens d'affichage desdites images.

3. Procédé selon l'une des revendications précédentes, **caractérisé en ce que** ladite commande (C) est une commande du jeu de commandes dudit module d'identification d'abonné, ainsi qu'il est défini par les recommandations GSM 11.11 et GSM 11.14 de l'ETSI.

4. Procédé selon la revendication 1, **caractérisé en ce que** l'étape d'exécution de ladite commande (C) par ledit équipement mobile (ME) est précédée d'une étape de lecture de ladite séquence d'images dans ledit fichier (F).

5. Système de radiocommunication comportant un module d'identification d'abonné (SIM) coopérant avec un équipement mobile (ME) possédant un moyen de visualisation (V), ledit module d'identification d'abonné (SIM) possédant un moyen d'émission d'une commande (C) d'affichage de séquences d'images à destination dudit équipement mobile (ME) et ledit équipement mobile (ME) possédant un moyen d'exécution de ladite commande (C) sur ledit moyen de visualisation (V), **caractérisé en ce que** ladite séquence d'images est stockée dans un fichier (F) dudit module d'identification d'abonné (SIM).

## Patentansprüche

1. Verfahren zur Anzeige einer Bildsequenz auf einem Anzeigemittel (V), das einem Mobilfunkgerät (ME) in Zusammenarbeit mit einem Teilnehmer-Identifikationsmodul (SIM) zugeordnet ist, umfassend die folgenden geordneten Schritte:
- durch das Teilnehmer-Identifikationsmodul (SIM) Senden eines Anzeigebefehls (C) einer Bildsequenz an das Mobilfunkgerät (ME),
- durch das Mobilfunkgerät (ME) Ausführen des Befehls (C) auf dem Anzeigemittel (V),
**dadurch gekennzeichnet, dass** die Bildsequenz in einer Datei (F) des Teilnehmer-Identifikationsmoduls (SIM) gespeichert ist.

2. Verfahren nach dem vorhergehenden Anspruch, **dadurch gekennzeichnet, dass** der Befehl (C) mindestens einen Parameter unter folgender Gesamtheit umfasst:
- Anzahl von Bildern in der Bildsequenz,
- Anzeigezeit jedes der Bilder der Bildsequenz,
- Anzeigerichtung der Bilder.

3. Verfahren nach einem der vorhergehenden Ansprüche, **dadurch gekennzeichnet, dass** der Befehl (C) ein Befehl der Einheit von Befehlen des Teilnehmer-Identifikationsmoduls ist, wie er durch die Empfehlungen GSM 11.11 und GSM 11.14 und ETSI definiert ist.

4. Verfahren nach Anspruch 1, **dadurch gekennzeichnet, dass** dem Schritt der Ausführung des Befehls (C) durch das Mobilfunkgerät (ME) ein Schritt des Lesens der Bildsequenz in der Datei (F) vorhergeht.

5. Funkkommunikationssystem, umfassend ein Teilnehmer-Identifikationsmodul (SIM), das mit einem Mobil-Funkgerät (ME) zusammenarbeitet, das ein Anzeigemittel (V) umfasst, wobei das Teilnehmer-Identifikationsgerät (SIM) ein Mittel zum Senden eines Befehls (C) zur Anzeige von Bildsequenzen an das Mobil-Funkgerät (ME) umfasst, wobei das Mobil-Funkgerät (ME) ein Mittel zur Ausführung des Befehls (C) auf dem Anzeigemittel (V) umfasst, **dadurch gekennzeichnet, dass** die Bildsequenz in einer Datei (F) des Teilnehmer-Identifikationsmoduls (SIM) gespeichert ist.

## Claims

1. A method of displaying a sequence of images on a displaying means (V) associated with a radio-communication mobile equipment (ME) co-operating with a subscriber identity module (SIM), the method comprising the following, in order:
sending by said subscriber identity module (SIM) an image sequence display command (C) to said mobile equipment (ME);
executing by said mobile equipment (ME) said command (C) on said displaying means (V);
**characterized in that** said sequence of images is stored in a file (F) of said subscriber identity module (SIM).

2. A method according to the preceding claim, wherein said command includes at least one parameter from the following set of parameters: a number of images in said sequence of images; a display time for each of the images of said sequence of images; and a direction in which said images are to be displayed.

3. A method according to any one of the preceding claims, wherein said command (C) is a command from a set of commands of said subscriber identity module, as defined by ETSI recommendations GSM 11.11 and GSM 11.14.

4. A method according to claim 1, wherein the executing of said command (C) by said mobile equipment (ME) is preceded by a reading of said sequence of images from said file (F).

5. A radio communications system comprising a subscriber identity module (SIM) co-operating with a mobile equipment (ME) possessing display means (V), said subscriber identity module (SIM) having means for sending a command (C), for displaying a sequence of images, to said mobile equipment (ME), and said mobile equipment (ME) having means for executing said command (C) on said displaying means (V), **characterized in that** said sequence of images is stored in a file (F) of said subscriber identity module (SIM).
